Europäisches Patentamt

European Patent Office

Office européen des brevets

(11) Veröffentlichungsnummer: **0 048 388**

**B1**

(12) **EUROPÄISCHE PATENTSCHRIFT**

(45) Veröffentlichungstag der Patentschrift: **03.04.85**

(21) Anmeldenummer: **81107078.8**

(22) Anmeldetag: **09.09.81**

(51) Int. Cl.⁴: **C 08 L 53/02,** C 08 L 51/04 // (C08L53/02, 51:04),(C08L51/04, 53:02)

(54) **Thermoplastische Formmasse.**

(30) Priorität: **20.09.80 DE 3035637**

(43) Veröffentlichungstag der Anmeldung: **31.03.82 Patentblatt 82/13**

(45) Bekanntmachung des Hinweises auf die Patenterteilung: **03.04.85 Patentblatt 85/14**

(84) Benannte Vertragsstaaten: **BE DE FR GB IT NL SE**

(56) Entgegenhaltungen:
DE-A-2 505 701
FR-A-2 343 777
FR-A-2 443 481

(73) Patentinhaber: **BASF Aktiengesellschaft Carl-Bosch-Strasse 38 D-6700 Ludwigshafen (DE)**

(72) Erfinder: **Gausepohl, Hermann, Dr. Neuweg 10 D-6704 Mutterstadt (DE)**
Erfinder: **Heinz, Gerhard, Dr. Im Vogelsang 2 D-6719 Weisenheim (DE)**
Erfinder: **Schmitt, Burghard, Dr. Bräunigstrasse 12 D-6520 Worms 24 (DE)**

Courier Press, Leamington Spa, England.

**Beschreibung**

Die Erfindung betrifft eine thermoplastische Formmasse, die im wesentlichen eine Mischung von mit Kautschuk modifizierten Polymerisaten von Vinylaromaten und einem verzweigten, Styrol und Butadien enthaltendeen, Blockcopolymerisat enthält.

Zum Stand der Technik nennen wir:

(1) DE—OS—26 10 068≙(GB—PS—1 570 404)
(2) DE—PS—17 45 258≙(US—PS—3 637 554)
(3) FR—PS—22 63 277≙(US—PS—4 075 285)
(4) DE—OS—25 05 701≙(CA—PS—1 061 927).

Mischungen aus Polystyrol und Sternblockcopolymerisaten sind aus (1) bzw. (2) bekannt. Es ist auch schon vorgeschlagen worden schlagfestes Polystyrol mit linearen Blockcopolymerisaten abzumischen [vgl. (3)] bzw. Mischungen mit radialen Blockcopolymerisaten, die einen Butadiengehalt von 50 Gew.% bzw. oberhalb von 50 Gew.% aufweisen, herzustellen [vgl. (4)].

Nach dem Spritzgußverfahren hergestellte Formteile aus schlagfesten Polystyrolen, wie sie aus der DE—AS—17 70 392 bzw. aus der DE—OS—26 13 352 bekannt sind, mit einer dispersen Phase aus diskreten, in diesem Falle vernetzten, Elastomerpartikeln zeigen zunehmende Orientierung mit sinkender Verarbeitungstemperatur. Demzufolge sinkt die Zähigkeit bei biaxialer Belastung zu tieferen Kunstofftemperaturen hin ab.

Diese Verarbeitungstemperaturabhängigkeit der Festigkeit gegen schockartige Belastung war zu beseitigen. Das insgesamt hohe Niveau der mechanischen Eigenschaften war dabei zu erhalten.

Die Aufgabe wurde gelöst durch die Maßnahmen des kennzeichnenden Teils von Patentanspruch 1.

Die Erfindung betrifft demzufolge thermoplastische Formmassen, enthaltend im wesentlichen eine Mischung aus zwei Mischpolymeristen I und II, wobei

I ein schlagfestes (Pfropf)-Mischpolymerisat darstellt, das aufgebaut ist aus

a1) mindestens einem vinylaromatischen Monomeren und
a2) wenigstens einem, überwiegend 1,3-Diene enthaltenden, gegebenenfalls vernetzten, (Co)-Polymerisat und

II ein sternförmig verzweigtes (radiales) Blockmischpolymerisat bedeutet, das der allgemeinen Formel

$$(A—B)_x—Y \text{ und/oder}$$

$$(B—A)_x—Y$$

mit durchschnittlich mehr als 2 Verzweigungen entspricht, das im wesentlichen aufgebaut ist aus

b1) mindestens einem vinylaromatischen Monomeren, das im wesentlichen die Polymersegmente A aufbaut und
b2) mindestens einem 1,3-Dien als Monomerem, das im wesentlichen die Polymersegmente B aufbaut, gegebenenfalls ferner enthaltend,

III übliche Hilfsmittel in wirksamen Mengen, dadurch gekennzeichnet, daß die Formmasse 5 bis 80 Gew.% des Mischpolymerisates II, bezogen auf I+II, enthält
und daß ferner
das Mischpolymerisat II aus 70 bis 80 Gew.% der Monomeren b1) und
20 bis 30 Gew.% der Monomeren b2)
aufgebaut ist.

Die Komponente I der erfindungsgemäßen Formmasse kann durch kontinuierliche Polymerisation von schlagfestem Polystyrol in zwei oder mehr Reaktionszonen hergestellt werden (Verfahren hierzu sind in der US—PS—3 243 481 bzw. in der US—PS—3 903 202 beschrieben). Besonders bevorzugt wird die Komponente I der erfindungsgemäßen Formmasse nach dem in der DE—AS—17 70 392 oder dem in der DE—OS—26 13 352 beschriebenen Verfahren hergestellt. Im übrigen sind zahlreiche schlagfeste Polystyrole mit vernetzten oder unvernetzten Weichkomponenten im Handel erhältlich.

Die Komponente I der erfindungsgemäßen Formmassen, d.h. das bevorzugt verwendete schlagfeste Polystyrol mit vernetztem Kautschuk auf Basis Polybutadien wird in Mengen von 95 bis 20 Gew.%, bezogen auf I und II angewendet.

Als vinylaromatische Monomere a) für die Herstellung der Komponente I kommen insbesondere Styrol sowie dessen Derivate wie α-Methylstyrol, o-, m-, p-Methylstyrol, 2,4-Dimethylstyrol sowie tert.-Butylstyrol in Betracht. Es können auch in geringen Mengen Acrylnitril verwendet werden. Bevorzugt wird jedoch Styrol alleine verwendet.

Das Monomere a2) für den Aufbau der Komponente I der erfindungsgemäßen Formmasse ist überwiegend Butadien-1,3, es können jedoch auch Isopren bzw. Mischungen aus Butadien und Isopren angewendet werden. Ebenso lassen sich Kautschuke natürlicher Herkunft oder auf EPDM-Basis verwenden.

Die Komponente II der erfindungsgemäßen Formmasse ist ein sternförmig verzweigtes Blockmischpolymerisat, das im wesentlichen aufgebaut ist aus mindestens einem vinylaromatischen Monomeren, bevorzugt Styrol, und mindestens einem 1,3-Dien; Butadien ist gegenüber Isopren oder Mischungen aus beiden bevorzugt. Die Komponente II der Formmasse wird in Mengen von 5 bis 80 Gew.%, bezogen auf I und II angewendet. Die Komponente II der erfindungsgemäßen Formmasse enthält 70 bis 80 Gew.% der Monomeren b1) sowie 20 bis 30 Gew.% der Monomeren b2).

Als Monomere b1) werden insbesondere Styrol und als Monomere b2) insbesondere Butadien angewendet. Das sternförmig verzweigte Block-

mischpolymerisat II wird nach den aus (1), (2) oder (4) bekannten Methoden durch anionische Polymerisation mit Hilfe von lithiumorganischen Verbindungen als Initiator hergestellt. Es kann durch die nachstehend allgemeine Formel

$$(A—B)_x—Y$$

oder

$$(B—A)_x—Y$$

dargestellt werden.

In der Formel soll A ein Polymersegment bedeuten, das im wesentlichen aus vinylaromatischen Monomeren aufgebaut ist. B bedeutet ein Polymersegment, das im wesentlichen 1.3-Diene als Monomerenbaustein enthält. Die allgemeine Formel soll lediglich zum Ausdruck bringen, daß sowohl die Butadien- als auch die Styrolenden an das Kupplungszentrum Y angebunden sein können. Bezüglich des Aufbaus der linearen Seitenäste des verzweigten Blockcopolymerisats bestehen verschiedene Möglichkeiten; Es können lineare Zweiblock- oder Dreiblockcopolymerisate oder Mischungen derselben vor der Herstellung des gekoppelten Endproduktes vorliegen, so daß die Komponente II in der Regel, da die Kopplung nicht quantitativ verläuft, eine komplizierte Mischung aus linearen und sternförmig verzweigten Copolymerisaten unterschiedlichen Sternastgehaltes darstellt.

Es können mit gutem Ergebnis die gemäß Patentanspruch 3 der DE—OS—25 50 226 erhältlichen verzweigten polymodalen Blockcopolymerisate als Komponente II der erfindungsgemäßen Formmassen verwendet werden. Bevorzugt sind auch die nach Patentanspruch 3 der DE—OS—25 50 227 erhältlichen verzweigten Blockcopolymerisate mit polymodalem Aufbau.

Die erfindungsgemäßen Formmassen können gegebenenfalls übliche Zusatzstoffe als Komponente III enthalten. Als Zusatzstoffe kommen bekannte Stabilisatoren, Fließmittel, Entformungshilfsmittel, Füllstoffe, Farbpigmente und dgl. in Frage. Die erfindungsgemäßen Formmassen besitzen neben einer guten Zähigkeit auch einen hervorragenden Glanz. Die Herstellung der erfindungsgemäßen Formmasse sowie die Einarbeitung der eventuell verwendeten Zusatzstoffe kann nach geeignetem und bekanntem Mischverfahren, z.B. in Extrudern, Knetern oder Walzen erfolgen.

Die erfindungsgemäßen Formmassen können durch Spritzgießen oder Strangpressen zu Formteilen verarbeitet werden.

Die erfindungsgemäßen Formmasen können auch mit den üblichen Brom- und/oder Chlor enthaltenden organischen Verbindungen und unter Mitverwendung üblicher Synergisten in wirksamen Mengen flammfest ausgerüstet werden.

Durch Abmischen der erfindungsgemäßen Formmasse mit Standardpolystyrol läßt sich eine für den Verpackungssektor geeignete translucente Dreiermischung herstellen. So zeigt z.B. die Mischung von Beispiel 2, mit Standardpolystyrol der Viskositätszahl von 74 (ml/g) im Gewichtsverhältnis 1:1 eine Remission von 70%, und eine Lochkerbschlagzähigkeit von 10,5 kJ/m². Die Dreiermischung ist somit translucent.

Für die Durchführung der Beispiele wurden folgende Produkte verwendet:

Produkt A:
ein nach Beispiel 2 der DE—AS—17 70 392 hergestelltes schlagfestes Polystyrol.

Produkt B:
ein verzweigtes Blockcopolymer, hergestellt nach Beispiel 1 der DE—OS—25 50 226.

Die in den Beispielen und Vergleichsversuchen aufgeführten Produkteigenschaften wurden wie folgt gemessen:

1. die Schädigungsarbeit in Nm nach DIN 53 443
2. die Streckspannung in [N/mm²] sowie die Reißdehnung in [%] nach DIN 53 455
3. die Lochkerbschlagzähigkeit, $a_{kl}$, in kJ/m² nach dem DIN-Entwurf auf Beschluß des Fachnormenausschusses Kunststoffe 4.3 vom März 1975, in Vorbereitung.
4. Der Oberflächenglanz wurde an Spritzlingen als Remission des eingestrahlten Lichtes in [%] mit einem Multiflexgalvanometer nach Dr. Lange gemessen.

Als Standard diente Filterpapier mit einem Reflektionswert von 0%.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiele 1 bis 5 und Vergleichsversuch A
Zur Durchführung der Beispiele wurde aus den vorstehend beschriebenen Produkten A und B in den in der Tabelle genannten Menge eine Mischung bei Temperaturen zwischen 180° und 260°C auf einer ZDSK-28 (Werner und Pfleiderer) hergestellt. Aus den erhaltenen Mischungen wurden bei Spritztemperaturen zwischen 200 und 280°C Rundplatten von 2 mm Dicke und 60 mm Durchmesser durch Spritzgießen hergestellt und an diesen die in der Tabelle genannten Meßwerte bestimmt. Wie aus einem Vergleich der Meßwerte mit den Ergebnissen von Versuch A hervorgeht, ist ersichtlich, daß die erfindungsgemäßen Formmassen praktisch keine Abhängigkeit der Zähigkeit von der Verarbeitungstemperatur zeigen; auch der Glanz der erfindungsgemäßen Formmasse ist hervorzuheben.

TABELLE

| Vergleichsversuch/ Beispiel | Mischung A:B | Spritztemp. (Kunststofftemp.) | Schädigungsarbeit Nm | Streckspannung N/mm² | Reißdehnung % | $a_{kl}$ kJ/m² | Glanz % |
|---|---|---|---|---|---|---|---|
| A | nur A | 200 | 0,5 | 23,5 | 39,5 | 10,3 | 28 |
| | | 220 | 4,2 | | | | |
| | | 240 | 9,2 | | | | |
| | | 260 | 12,1 | | | | |
| | | 280 | 13,5 | | | | |
| 1 | 95/5 | 200 | 5,5 | 25,9 | 40,6 | 16,7 | 73 |
| | | 220 | 8,6 | | | | |
| | | 240 | 12,5 | | | | |
| | | 260 | 14,2 | | | | |
| | | 280 | 14 | | | | |
| 2 | 90/10 | 200 | 6,9 | 24,3 | 43,9 | 20,4 | 68 |
| | | 220 | 10,9 | | | | |
| | | 240 | 12,2 | | | | |
| | | 260 | 15,0 | | | | |
| | | 280 | 14,5 | | | | |

TABELLE (contd.)

| Vergleichsversuch/ Beispiel | Mischung A:B | Spritztemp. (Kunststofftemp.) | Schädigungsarbeit Nm | Streckspannung N/mm² | Reißdehnung % | $a_{kl}$ kJ/m² | Glanz % |
|---|---|---|---|---|---|---|---|
| 3 | 70/30 | 200 | 15,9 | 24,7 | 53,9 | 22,2 | 42 |
| | | 220 | 18,9 | | | | |
| | | 240 | 21,4 | | | | |
| | | 260 | 18,1 | | | | |
| | | 280 | 23,4 | | | | |
| 4 | 50/50 | 200 | 21,9 | 27,8 | 62,5 | 40,1 | 55 |
| | | 220 | 23,6 | | | | |
| | | 240 | 21,4 | | | | |
| | | 260 | 24,1 | | | | |
| | | 280 | 23,4 | | | | |
| 5 | 30/70 | 200 | 23,6 | 28,6 | 57,9 | 37,6 | 61 |
| | | 220 | 21,6 | | | | |
| | | 240 | 23,3 | | | | |
| | | 260 | 24,1 | | | | |
| | | 280 | 22,6 | | | | |

## Patentansprüche

1. Thermoplastische Formmasse, enthaltend im wesentlichen eine Mischung aus zwei Mischpolymerisaten I und II, wobei

I ein schlagfestes (Pfropf)-Mischpolymerisat darstellt, das aufgebaut ist aus

a1) mindestens einem vinylaromatischen Monomeren und
a2) wenigstens einem, überwiegend 1,3-Diene enthaltenden, gegebenenfalls vernetzten, (Co)-Polymerisat und

II ein sternförmig verzweigtes (radiales) Blockmischpolymerisat bedeutet, das der allgemeinen Formel

$$(A—B)_x—Y \text{ und/oder}$$

$$(B—A)_x—Y$$

mit durchschnittlich mehr als 2 Verzweigungen, entspricht, das im wesentlichen aufgebaut ist aus

b1) mindestens einem vinylaromatischen Monomeren, das im wesentlichen die Polymersegmente A aufbaut und
b2) mindestens einem 1,3-Dien als Monomerem, das im wesentlichen die Polymersegmente B aufbaut, gegebenenfalls ferner enthaltend,

III übliche Hilfsmittel in wirksamen Mengen, dadurch gekennzeichnet, daß die Formmasse 5 bis 80 Gew.% des Mischpolymerisates II, bezogen auf I+II, enthält
und daß ferner
das Mischpolymerisat II aus 70 bis 80 Gew.% der Monomeren b1) und
20 bis 30 Gew.% der Monomeren b2) aufgebaut ist.

2. Verwendung der Formmassen gemäß Anspruch 1 zur Herstellung von Formteilen durch Spritzgießen.

3. Formteile aus Formmassen gemäß Anspruch 1.

## Revendications

1. Matière à mouler thermoplastique, contenant essentiellement un mélange de deux copolymères I et II, à savoir

I un copolymérisat (de greffage) résistant aux chocs, constitué de

a1) au moins un monomère vinyl-aromatique et
a2) au moins un (co)-polymérisat contenant principalement des 1,3-diènes et éventuellement réticulé, et

II un copolymérisat à blocs à ramifications en étoile (radiales), correspondant à la formule générale

$$(A—B)_x—Y$$

et (ou)

$$(B—A)_x—Y,$$

possédant en moyenne plus de deux ramifications et constitué essentiellement de

b1) au moins un monomère vinyl-aromatique, dont dérivent pour l'essentiel les segments polymères A et
b2) au moins un monomère 1,3-diénique, qui forme pour l'essentiel les segments polymères B, ainsi qu'éventuellement

III des additifs usuels dans des proportions efficaces, caractérisée en ce que 80% du poids de I+II sont formés du copolymérisat II, celui-ci étant composé à raison de 70 à 80% en poids du monomère b1) et à raison de 20 à 30% en poids du monomère b2).

2. Utilisation de matières à mouler selon la revendication 1 pour la fabrication de pièces façonnées par moulage par injection.

3. Pièces façonnées, fabriquées à l'aide de matières à mouler selon la revendication 1.

## Claims

1. A thermoplastic molding material which essentially contains a mixture of two copolymers I and II, namely

I a high-impact (graft) copolymer which is composed of

a1) one or more vinyl-aromatic monomers, and
a2) one or more polymers or copolymers which predominantly contain 1,3-diene units and may or may not be crosslinked, and

II a star-shaped branched (radial) block copolymer which corresponds to the general formula $(A—B)_x Y$ and/or $(B—A)_x—Y$, with an average of more than 2 branches, and which is essentially composed of

b1) one or more vinyl-aromatic monomers which essentially constitute the polymer segments A, and
b2) one or more 1,3-diene monomers which essentially constitute the polymer segments B, and which may or may not additionally contain

III conventional auxiliaries in effective amounts, wherein the molding material contains from 5 to 80% by weight of copolymer II, based on the sum of I+II, and the copolymer II contains from 70 to 80% by weight of units of monomer b1) and from 20 to 30% by weight of units of monomer b2).

2. The use of a molding material as claimed in claim 1 for the production of injection moldings.

3. Moldings produced from a molding material as claimed in claim 1.